# FASCICULE DE BREVET EUROPEEN

(11) **EP 2 430 321 B1**
(45) Date de publication et mention de la délivrance du brevet: **27.01.2016**
(21) Numéro de dépôt: 10723669.7
(22) Date de dépôt: 13.04.2010
(51) Int. Cl.: F16B 5/02

(54) **DISPOSITIF POUR FIXER UNE PREMIERE PIECE SUR UNE DEUXIEME PIECE QUI EST ELLE-MEME FIXEE SUR UNE TROISIEME PIECE, ASSEMBLAGE DE TROIS PIECES EN PARTICULIER D'UN VEHICULE AUTOMOBILE**
VORRICHTUNG ZUR BEFESTIGUNG EINES ERSTEN TEILS AN EINEM ZWEITEN TEIL, DAS AN EINEM DRITTEN TEIL BEFESTIGT IST UND MONTAGE VON DREI TEILEN, INSBESONDERE EINES KRAFTFAHRZEUGS
DEVICE FOR ATTACHING A FIRST PART TO A SECOND PART WHICH IS ATTACHED TO A THIRD PART AND THE ASSEMBLY OF THREE PARTS, IN PARTICULAR, OF A MOTOR VEHICLE

(30) Priorité: 12.05.2009 FR 0953116
(43) Date de publication de la demande: 21.03.2012
(73) Titulaire: Peugeot Citroën Automobiles SA, 78140 Vélizy-Villacoublay (FR)
(72) Inventeur: LEPINE, Arnaud, F-25420 Bart (FR); VUILLEMIN, Roland, F-25340 Abbenans (FR)
(74) Mandataire: Fosse, Danièle
(86) Numéro de dépôt international: PCT/FR2010/050715
(87) Numéro de publication internationale: WO 2010/130906

(56) Documents cités:
- WO-A1-00/64691
- WO-A2-2006/102566
- US-A- 1 911 820

## Description

La présente invention concerne un dispositif pour fixer une première pièce sur une deuxième pièce qui elle-même fixée sur une troisième pièce.

L'invention concerne également un assemblage de trois pièces, notamment d'un véhicule automobile, au moyen d'un dispositif de fixation selon l'invention.

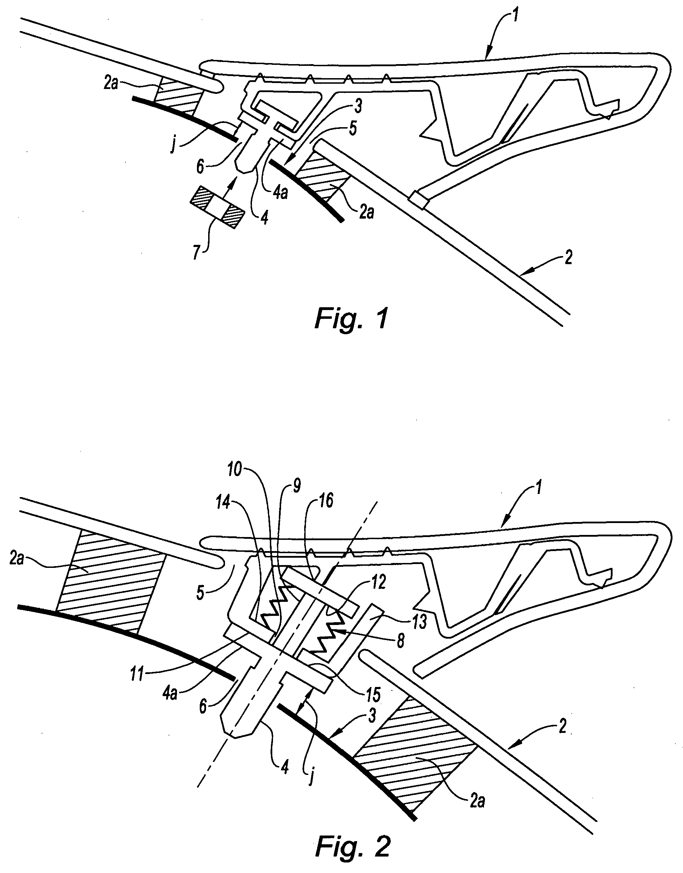

La figure 1 est une vue schématique en coupe montrant l'assemblage de trois pièces 1, 2, 3.

Les deux premières pièces 1, 2 sont par exemple des équipements extérieurs d'un véhicule automobile et la pièce 3 une partie en tôle de la caisse du véhicule.

La pièce 2 est fixée sur la pièce 3 au moyen de cordons de colle 2a.

La première pièce 1 s'appuie sur la pièce 2 et porte une vis 4 qui peut s'engager dans une ouverture 5 de la deuxième pièce 2.

Un écrou 7 vissé sur la vis 4 permet de serrer la pièce 1 contre la pièce 2.

Avant le serrage de l'écrou 7, il existe un jeu j entre la pièce 3 et une surface d'appui 4a qui est liée à la pièce 1.

Le serrage de l'écrou 7 sur la vis 4 a pour effet de réduire ce jeu j.

Cependant, le couple de serrage de l'écrou 7 peut être trop important ce qui risque de casser la pièce 1 ou de déformer celle-ci.

Au contraire, si le couple de serrage est insuffisant, la pièce 1 risque de ne pas être plaquée correctement sur la pièce 2 et un jeu peut alors subsister entre ces deux pièces.

Dans les deux cas ci-dessus, la qualité de l'assemblage peut être affectée.

Des tels assemblages de trois pièces sont notamment décrits dans WO 2006/102566, US 1 911 820 et WO 00/64691**.**

Le but de la présente invention est de remédier à cet inconvénient.

Ce but est atteint selon l'invention, grâce à un dispositif pour fixer une première pièce sur une deuxième pièce, qui elle-même fixée sur une troisième pièce, la première pièce portant une vis pouvant s'engager dans une ouverture de la deuxième pièce et dans un trou de la troisième pièce, un écrou vissé sur la vis permettant de serrer la première pièce contre la deuxième pièce, la vis étant solidaire de la première pièce au moyen d'un élément pouvant se déformer élastiquement lors du serrage de l'écrou.

Grâce à cet élément déformable élastiquement, la force de serrage de la première pièce sur la deuxième pièce ne dépend plus du couple de serrage de l'écrou sur la vis, mais seulement de l'effort exercé par l'élément déformable élastiquement.

Cet effort étant prédéterminé selon les caractéristiques de cet élément, on évite tout risque de détérioration des pièces, en raison d'un serrage excessif ou d'un serrage insuffisant engendrant une mauvaise qualité d'assemblage.

Ledit élément est un ressort.

La vis a une surface adaptée pour pouvoir prendre appui sur la troisième pièce et un jeu étant compris entre cette surface d'appui et la troisième pièce avant serrage de l'écrou, ledit ressort ayant une course de déformation et une raideur suffisantes pour pouvoir compenser le jeu lors du serrage de l'écrou et pour plaquer la première pièce sur la deuxième pièce selon une force prédéterminée.

Dans un premier mode de réalisation, ledit ressort est un ressort hélicoïdal entourant une tige axialement solidaire de la vis, engagée dans une ouverture réalisée dans la première pièce pour pouvoir coulisser axialement dans celle-ci, le ressort étant inséré entre une surface d'appui entourant ladite ouverture et une butée portée par l'extrémité de la tige opposée à la vis.

De préférence, la tige et le ressort sont entourés par une cage pouvant s'engager dans l'ouverture de la deuxième pièce, la tige étant montée coulissante dans une ouverture réalisée dans la paroi du fond de ladite cage.

De préférence également, la vis comporte une surface pouvant s'appuyer contre la surface extérieure de la paroi du fond de ladite cage.

Dans un second mode de réalisation, ledit ressort est une lame de ressort dont les deux extrémités opposées sont fixées à la première pièce, la vis étant fixée sensiblement au milieu de cette lame de ressort.

La première pièce peut comporter deux protubérances traversant des ouvertures de la deuxième pièce, la lame de ressort étant fixée aux extrémités des deux protubérances.

Selon un autre aspect, l'invention concerne également un assemblage de trois pièces fixées ensemble au moyen d'un dispositif de fixation selon l'invention.

Dans une application préférée de l'invention, la première et deuxième pièces sont des pièces d'un véhicule automobile et la troisième pièce est une partie en tôle de la caisse du véhicule.

D'autres particularités et avantages de l'invention apparaîtront encore tout au long de la description ci-après.

Aux dessins annexés, donnés à titre d'exemples, non limitatifs :
- la figure 2 est une vue en coupe analogue à la figure 1, montrant un premier mode de réalisation d'un dispositif de fixation selon l'invention, avant fixation définitive sur la troisième pièce,
- la figure 3 est une vue analogue à la figure 2, montrant la fixation définitive du dispositif sur la troisième pièce,
- la figure 4 est une vue en coupe d'un second mode de réalisation d'un dispositif de fixation selon l'invention, avant fixation définitive sur la troisième pièce.

Le dispositif de fixation représenté sur la figure 2, permet comme dans le cas de celui de la figure 1 de fixer une première pièce 1 sur une deuxième pièce 2, qui est elle-même fixée sur une troisième pièce 3, au moyen de cordons de colle 2a.

La première pièce 1 porte une vis 4 pouvant s'engager dans une ouverture 5 de la deuxième pièce 2 et dans un trou 6 de la troisième pièce 3.

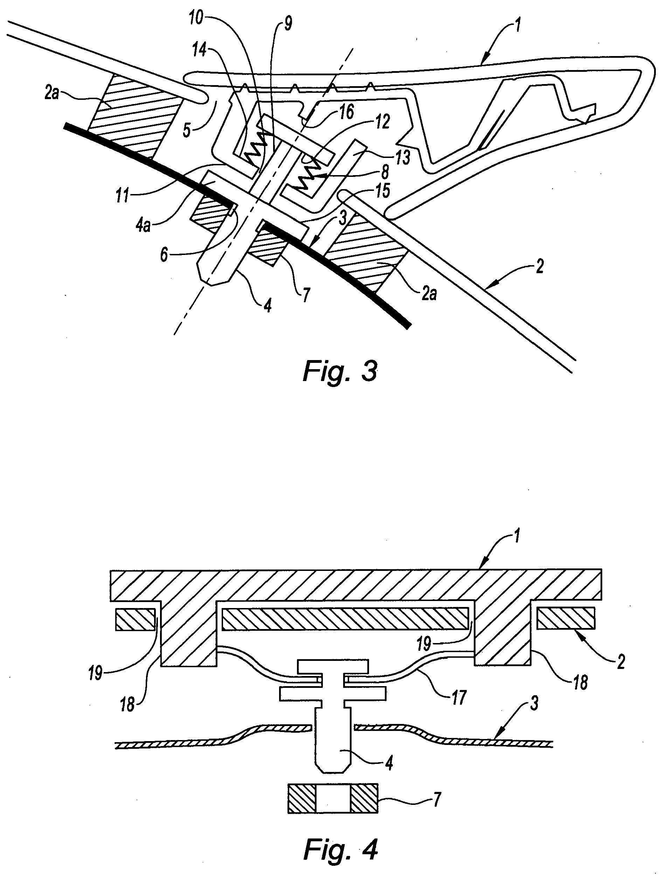

Un écrou 7 (voir figure 3) vissé sur la vis 4 permet de serrer les première et deuxième pièces 1, 2 contre la troisième pièce 3.

Avant serrage de l'écrou 7, un certain jeu j existe (voir figure 2) entre la surface d'appui 4a de la vis 4 et la troisième pièce 3.

Dans le dispositif selon l'invention représenté sur les figures 2 et 3, la vis 4 est solidaire de la première pièce 1 au moyen d'un élément 8 pouvant se déformer élastiquement lors du serrage de l'écrou 7.

Dans l'exemple des figures 2 et 3, l'élément 8 est un ressort hélicoïdal qui est comprimé lors du serrage de la vis 4.

Le ressort 8 a une course de déformation et une raideur suffisantes pour pouvoir compenser lors du serrage de l'écrou 7 le jeu j compris entre la troisième pièce 3 et la deuxième pièce 2 et pour plaquer la première pièce 1 sur la deuxième pièce 2 selon une force prédéterminée.

Comme montré par les figures 2 et 3, le ressort hélicoïdal 8 entoure une tige 9 axialement solidaire de la vis 4, engagée dans une ouverture 10 réalisée dans la première pièce 1 pour pouvoir coulisser axialement dans celle-ci.

Le ressort 8 est inséré entre une surface d'appui 11 entourant l'ouverture 10 et une butée 12 portée par l'extrémité de la tige 9 opposée à la vis 4.

Par ailleurs, la tige 9 et le ressort 8 sont entourés par une cage 13 pouvant s'engager dans l'ouverture 5 de la deuxième pièce 2.

La tige 9 est montée coulissante dans l'ouverture 10 réalisée dans la paroi 14 du fond de la cage 13.

En outre, la vis 4 comporte une surface 15 en forme de disque pouvant s'appuyer contre la surface extérieure 11 de la paroi 14 du fond de la cage 13, comme montré par la figure 2, lorsque le dispositif n'est pas encore serré sur la pièce 3.

Le dispositif de fixation représenté sur les figures 2 et 3 fonctionne comme suit.

On engage tout d'abord la cage 13 portant la vis 4 de la pièce 1 dans l'ouverture 5 de la pièce 2 puis on engage la vis 4 dans le trou 6 de la pièce 3, comme indiqué sur la figure 2.

Dans cette position, il existe un jeu j entre la surface d'appui 4a de la vis 4 et la pièce 3.

Le ressort 8 logé dans la cage 13 est détendu et la butée 12 est en appui sur une protubérance 16 de la pièce 1.

On visse ensuite l'écrou 7 sur la vis 4, comme indiqué sur la figure 3, jusqu'à ce que la partie en forme de disque 15 portée par la vis 4 prenne appui sur la surface extérieure de la pièce 3.

Lors du vissage de l'écrou 7 sur la vis 4 la tige 9 solidaire de cette dernière se déplace vers la pièce 3 en entraînant avec elle la butée 12, ce qui a pour effet de comprimer le ressort hélicoïdal 8 contre la paroi 14 constituant le fond de la cage 13.

La compression du ressort 8 sur cette paroi 14 a pour effet de plaquer la pièce 1 sur la pièce 2.

On voit sur la figure 3, qu'en fin de serrage de l'écrou 7, il subsiste un jeu entre la paroi 14 de la cage 13 et la partie 15 en forme de disque portée par la vis 4.

Ainsi, la force avec laquelle la pièce 1 est plaquée sur la pièce 2 est égale à la force avec laquelle le ressort 8 s'appuie sur la paroi 14 de la cage 13.

Cette force est indépendante du couple de serrage de l'écrou 7 et dépend uniquement des caractéristiques du ressort 8.

Par conséquent, en choisissant un ressort 8 présentant les caractéristiques appropriées, on peut obtenir que la pièce 1 soit plaquée sur la pièce 2 dans des conditions optimales pour éviter tout risque de détérioration des pièces 1 et 2 et tout jeu entre celles-ci du à un serrage insuffisant.

De plus, le ressort 8 compense les tolérances d'assemblage entre la pièce 2 et la pièce 3.

Le dispositif de fixation représenté sur les figures 2 et 3 permet ainsi d'obtenir un assemblage entre trois pièces satisfaisant tous les critères de qualité.

Dans une application préférée de l'invention, les pièces 1 et 2 peuvent être des équipements extérieurs d'un véhicule automobile.

Par exemple, la pièce 1 peut être un déflecteur, la pièce 2 une vitre et la pièce 3 une partie en tôle de la caisse ou d'un ouvrant de véhicule automobile.

Bien entendu, le ressort 8 peut être remplacé par tout autre élément élastique tel qu'un bloc en caoutchouc.

## Revendications

1. Dispositif pour fixer une première pièce (1) sur une deuxième pièce (2), qui elle-même fixée sur une troisième pièce (3), la première pièce (1) portant une vis (4) pouvant s'engager dans une ouverture (5) de la deuxième pièce (2) et dans un trou (6) de la troisième pièce (3), un écrou (7) vissé sur la vis (4) permettant de serrer la première pièce (1) contre la deuxième pièce (2), la vis (4) étant solidaire de la première pièce (1) au moyen d'un élément (8, 17) pouvant se déformer élastiquement lors du serrage de l'écrou (7), ledit élément étant un ressort (8, 17), la vis (4) ayant une surface (4a) adaptée pour pouvoir prendre appui sur la troisième pièce (3) et un jeu (j) étant compris entre cette surface d'appui (4a) et la troisième pièce (3) avant serrage de l'écrou (7), **caractérisé en ce que** ledit ressort (8, 17) a une course de déformation et une raideur suffisantes pour pouvoir compenser le jeu (j) lors du serrage de l'écrou (7) et pour plaquer la première pièce (1) sur la deuxième pièce (2) selon une force prédéterminée.

2. Dispositif selon la revendication 1, **caractérisé en ce que** ledit ressort est un ressort hélicoïdal (8) entourant une tige (9) axialement solidaire de la vis (4), engagée dans une ouverture (10) réalisée dans la première pièce (1) pour pouvoir coulisser axialement dans celle-ci, le ressort (8) étant inséré entre une surface d'appui (11) entourant ladite ouverture (10) et une butée (12) portée par l'extrémité de la tige (9) opposée à la vis (4).

3. Dispositif selon la revendication 2, **caractérisé en ce que** la tige (9) et le ressort (8) sont entourés par une cage (13) pouvant s'engager dans l'ouverture (5) de la deuxième pièce (2), la tige (9) étant montée coulissante dans l'ouverture (10) réalisée dans la paroi (14) du fond de ladite cage (13).

4. Dispositif selon la revendication 3, **caractérisé en ce que** la vis (4) comporte une surface (15) pouvant s'appuyer contre la surface extérieure (11) de la paroi (14) du fond de ladite cage (13).

5. Dispositif selon la revendication 1, **caractérisé en ce que** ledit ressort est une lame de ressort (17) dont les deux extrémités opposées sont fixées à la première pièce (1), la vis (4) étant fixée sensiblement au milieu de cette lame de ressort (17).

6. Dispositif selon la revendication 5, **caractérisé en ce que** la première pièce (1) comporte deux protubérances (18) traversant des ouvertures (19) de la deuxième pièce (2), la lame de ressort (17) étant fixée aux extrémités des deux protubérances (18).

7. Assemblage de trois pièces (1, 2, 3) fixées ensemble au moyen d'un dispositif de fixation selon l'une des revendications 1 à 6.

8. Assemblage selon la revendication 7, **caractérisé en ce que** la première et la deuxième pièce (1, 2) sont des pièces d'un véhicule automobile et la troisième pièce (3) est une partie en tôle de la caisse du véhicule.

## Patentansprüche

1. Vorrichtung zur Befestigung eines ersten Teils (1) an einem zweiten Teil (2), das selbst an einem dritten Teil (3) befestigt ist, wobei das erste Teil (1) eine Schraube (4) trägt, die in eine Öffnung (5) des zweiten Teils (2) und in ein Loch (6) des dritten Teils (3) eingreifen kann, wobei es eine auf die Schraube (4) geschraubte Mutter (7) ermöglicht, das erste Teil (1) gegen das zweite Teil (2) zu spannen, wobei die Schraube (4) mit dem ersten Teil (1) mit Hilfe eines Elements (8, 17) verbunden ist, das sich elastisch beim Spannen der Mutter (7) verformen kann, wobei das Element eine Feder (8, 17) ist, wobei die Schraube (4) eine Fläche (4a) hat, die dazu vorgesehen ist, auf dem dritten Teil (3) zur Auflage zu gelangen, und wobei ein Spiel (j) zwischen dieser Auflagefläche (4a) und dem dritten Teil (3) vor dem Spannen der Mutter (7) vorhanden ist, **dadurch gekennzeichnet, dass** die Feder (8, 17) einen Verformungsweg und eine Steifigkeit hat, die ausreichen, um das Spiel (j) beim Spannen der Mutter (7) auszugleichen und das erste Teil (1) auf das zweite Teil (2) mit einer vorbestimmten Kraft zu drücken.

2. Vorrichtung nach Anspruch 1, **dadurch gekennzeichnet, dass** die Feder eine Spiralfeder (8) ist, die eine axial mit der Schraube (4) verbundene Stange (9) umgibt, die in eine Öffnung (10) eingreift, die in dem ersten Teil (1) hergestellt ist, um axial in dieser zu gleiten, wobei die Feder (8) zwischen eine Auflagefläche (11), die die Öffnung (10) umgibt, und einem Anschlag (12) eingesetzt ist, der von dem Ende der Stange (9) gegenüber der Schraube (4) getragen wird.

3. Vorrichtung nach Anspruch 2, **dadurch gekennzeichnet, dass** die Stange (9) und die Feder (8) von einem Gehäuse (13) umgeben sind, das in die Öffnung (5) des zweiten Teils (2) eingreifen kann, wobei die Stange (9) gleitend in der Öffnung (10) montiert ist, die in der Wand (14) des Bodens des Gehäuses (13) hergestellt ist.

4. Vorrichtung nach Anspruch 3, **dadurch gekennzeichnet, dass** die Schraube (4) eine Fläche (15) umfasst, die sich an die Außenfläche (11) der Wand (14) des Bodens des Gehäuses (13) anlegen kann.

5. Vorrichtung nach Anspruch 1, **dadurch gekennzeichnet, dass** die Feder ein Federblatt (17) ist, dessen beiden gegenüberliegenden Enden an dem ersten Teil (1) befestigt sind, wobei die Schraube (4) im Wesentlichen in der Mitte dieses Federblattes (17) befestigt ist.

6. Vorrichtung nach Anspruch 5, **dadurch gekennzeichnet dass** das erste Teil (1) zwei Ausstülpungen (18), die durch Öffnungen (19) des zweiten Teils (2) hindurchgehen, umfasst, wobei das Federblatte (17) an den Enden der beiden Ausstülpungen (18) befestigt ist.

7. Anordnung von drei Teilen (1, 2, 3), die mit Hilfe einer Befestigungsvorrichtung nach einem der Ansprüche 1 bis 6 aneinander befestigt sind.

8. Anordnung nach Anspruch 7, **dadurch gekennzeichnet, dass** das erste und das zweite Teil (1, 2) Teile eines Kraftfahrzeugs sind, und das dritte Teil (3) ein Blechteil des Fahrzeuggehäuses ist.

## Claims

1. A device for attaching a first part (1) to a second part (2), which is attached to a third part (3), the first part (1) bearing a screw (4) that can be inserted into an opening (5) in the second part (2) and into a hole (6) in the third part (3), a nut (7), which is screwed on the screw (4) being able to be used to tighten the first part (1) against the second part (2), the screw (4) being solidly connected to the first part (1) by means of an element (8, 17) that can deform elastically as the nut (7) is being tightened, said element being a spring (8, 17), the screw (4) having a surface (4a) adapted to be able to rest on the third part (3) and a play (j) being comprised between this support surface (4a) and the third part (3) before tightening of the nut (7), **characterized in that** said spring (8, 17) has a sufficient deformation course and rigidity to be able to compensate the play (j) as the nut (7) is being tightened and to hold the first part (1) flat on the second part (2) according to a predetermined force.

2. The device according to Claim 1, **characterized in that** said spring is a helicoidal spring (8) surrounding a rod (9) axially integral with the screw (4), inserted into an opening (10) formed in the first part (1) to be able to slide axially in the latter, the spring (8) being inserted between a support surface (11) surrounding said opening (10) and a stop (12) carried by the end of the rod (9) opposed to the screw (4).

3. The device according to Claim 2, **characterized in that** the rod (9) and the spring (8) are surrounded by a cage (13) able to engage in the opening (5) of the second part (2), the rod (9) being mounted in a sliding manner in the opening (10) formed in the wall (14) of the bottom of said cage (13).

4. The device according to Claim 3, **characterized in that** the screw (4) comprises a surface (15) able to rest against the exterior surface (11) of the wall (14) of the bottom of said cage (13).

5. The device according to Claim 1, **characterized in that** said spring is a spring blade (17), the two opposite ends of which are attached to the first part (1), the screw (4) being attached substantially in the centre of this spring blade (17).

6. The device according to Claim 5, **characterized in that** the first part (1) comprises two protuberances (18) passing through openings (19) of the second part (2), the spring blade (17) being attached at the ends of the two protuberances (18).

7. An assembly of three parts (1, 2, 3) attached together by means of an attachment device according to one of Claims 1 to 6.

8. The assembly according to Claim 7, **characterized in that** the first and the second part (1, 2) are parts of a motor vehicle and the third part (3) is a sheet metal part of the body of the vehicle.
